# EUROPÄISCHE PATENTSCHRIFT

(11) **EP 0 708 270 B1**
(45) Veröffentlichungstag und Bekanntmachung des Hinweises auf die Patenterteilung: **15.10.1997**
(21) Anmeldenummer: 95111444.6
(22) Anmeldetag: 20.07.1995
(51) Int. Cl.: F16G 13/16

(54) **Schlauchkette**
Supporting chain for pipes
Chaîne de support de conduites

(30) Priorität: 27.07.1994 DE 4426598
(43) Veröffentlichungstag der Anmeldung: 24.04.1996
(73) Patentinhaber: Bauer Spezialtiefbau GmbH, 86529 Schrobenhausen (DE)
(72) Erfinder: Arzberger, Maximilian, Dipl.-Ing. (FH), D-86568 Igenhausen (DE); Weixler, Leonhard, Dipl.-Ing. (FH), D-86672 Thierhaupten (DE)
(74) Vertreter: Heim, Hans-Karl, Dipl.-Ing.

(56) Entgegenhaltungen:
- EP-A- 0 518 292
- DE-B- 1 131 480

## Beschreibung

Die Erfindung betrifft eine Schlauchkette, bestehend aus im Querschnitt allgemein U-förmigen Kettengliedern zur Aufnahme eines Schlauches, die mittels Stahlseilen jeweils an ihren Schenkeln verbunden sind, gemäß dem Oberbegriff des Anspruchs 1.

Derartige Schlauchketten oder Gliederketten zum Führen von Kabeln oder Schläuchen dienen zur Ver- oder Entsorgung von mit einem ortsfesten Anschluß verbundenen beweglichen Verbrauchern. Dabei soll ein Verwickeln oder Verklemmen der Kabel oder Schläuche verhindert werden.

Eine bekannte derartige Gliederkette (DE-PS 1131480) umfaßt einzelne, gelenkig miteinander verbundene Glieder, die einen U-förmigen Querschnitt aufweisen, der mit einem Deckel verschließbar ist. Innerhalb der Glieder sind die Leitungen angeordnet. Die einzelnen Glieder sind mittels Stahldrähten miteinander verbunden und so ausgebildet, daß die Kette freitragend, in einer Richtung aber abbiegbar ist. Solche Ketten werden beispielsweise für Fernsprechzentralen und -vermittlungen zum Anschluß beweglicher und verfahrbarer Rahmen verwendet.

Eine ähnliche Gliederkette ist aus dem DE-G 1978457 bekannt. Diese Gliederkette oder Schleppkabelführung dient zur Verwendung bei Werkzeugmaschinen und soll die Schläuche oder Kabel vor Beschädigungen durch Dreh- oder Bohrspäne schützen. Auch in diesem Fall sind die einzelnen Kettenglieder U-förmig ausgebildet und mittels Stahlseilen verbunden.

Gegenüber Gliederketten, bei denen einzelne Glieder gelenkig mittels Stegen verbunden sind, wird durch die Stahlseilverbindung ein Verklemmen der Glieder vermieden.

Diese bekannten Schlauch- oder Gliederketten sind jedoch für hohe Beanspruchungen, wie z.B. bei Tiefbauwerkzeugen, ungeeignet. Aus diesem Grund wurde in der DE-4119211 C1 eine Schlauchkette mit mehreren parallelen, auf eine Trommel aufwickelbaren Schläuchen vorgeschlagen, wobei die Schläuche in vorgegebenen Längsabständen mit Querstegen miteinander verbunden sind, die die Schläuche in vorgegebenen seitlichen Abständen zueinander halten. Die Querstege sind in zwei Strängen zugfest und gelenkig über Abstandshalter miteinander verbunden. Beim Aufwickeln auf die Trommel kommen die Abstandshalter aufeinander zu liegen. Sie sind im übrigen so bemessen, daß die Schläuche in den einzelnen Lagen entlastet aufeinander zu liegen kommen.

Ein derartiges Tiefbauwerkzeug benötigt neben den obengenannten Versorgungsschläuchen im allgemeinen weiter eine Entsorgungsleitung zum Abtransport des meist mit einer Spülflüssigkeit vermischten Abraums. Diese Leitung oder dieser Schlauch weist einen wesentlich größeren Durchmesser als die Versorgungsschläuche auf und muß daher auf einer gesonderten Trommel aufgewickelt werden. Um ein Zusammenquetschen des Schlauches zu vermeiden, verwendet ein bekanntes Tiefbauwerkzeug eine horizontal angeordnete Trommel, auf der der Schlauch einreihig in mehreren Lagen aufgewickelt wird. Eine andere bekannte Konstruktion eines derartigen Tiefbauwerkzeugs verwendet eine vertikal angeordnete Trommel, auf die der Schlauch einlagig spiralförmig in mehreren Reihen aufgewickelt wird. Beide Konstruktionen erfordern relativ viel Raum.

Es ist daher Aufgabe der vorliegenden Erfindung, eine Schlauchkette der eingangs genannten Art derart weiterzubilden, daß sie robust ist, hohen Beanspruchungen in rauher Umgebung standhält, einfach herstellbar ist und ein mehrlagiges Aufwickeln auf eine vertikale Trommel ermöglicht.

Diese Aufgabe wird durch die in Anspruch 1 gekennzeichnete Erfindung gelöst, d.h. dadurch, daß der Innendurchmesser des U-förmigen Querschnitts etwa dem Außendurchmesser des Schlauches entspricht, daß die oberen freien Schenkel des U-förmigen Querschnitts sich über den Schlauchumfang hinaus erstrecken, daß die Schenkel an ihren äußeren unteren Enden Aussparungen zur Aufnahme von darunter angeordneten, sich über den Schlauchumfang hinaus erstreckenden freien Schenkeln aufweisen, und daß der Steg des U-förmigen Querschnitts auf seiner Außenseite einen Vorsprung aufweist.

Mit der Erfindung wird eine platzsparende, konstruktiv günstige vertikale Anordnung einer Schlauchtrommel ermöglicht, wobei eine sichere Führung und Lagerung der Schlauchkette gewährleistet ist.

Vorteilhafte Ausgestaltungen der Erfindung ergeben sich aus den Unteransprüchen.

Dadurch, daß der Vorsprung so ausgebildet ist, daß er den Schlauchumfang eines in einem darunter positionierten Kettenglied angeordneten Schlauches berührt, wird in vorteilhafter Weise der Schlauch in dem U-förmigen Querschnitt festgelegt.

Eine noch vorteilhaftere Festlegung ergibt sich dadurch, daß gemäß einer weiteren vorteilhaften Ausgestaltung der Erfindung vorgesehen ist, daß der Vorsprung mit einer etwa der Krümmung des Außenumfangs des Schlauches entsprechenden konkaven Aussparung versehen ist.

Eine weitere vorteilhafte Ausgestaltungen der Erfindung sieht vor, daß die Breite des Vorsprungs etwa dem Innendurchmesser des U-förmigen Querschnitts entspricht. Hierdurch wird eine geschlossene Anordnung des Schlauches innerhalb der auf der Trommel angeordneten Schlauchkette ermöglicht. Weiter wird eine sichere Führung erreicht, durch die ein Verklemmen der Schlauchkette auf oder innerhalb der Trommel vermieden wird.

Gemäß einer weiteren vorteilhaften Ausgestaltung der Erfindung ist vorgesehen, daß jedes Kettenglied in seiner Längsrichtung, ausgehend von seiner Längsachse, eine zur Ober- und Unterseite hin abnehmende Breite aufweist. Diese Ausgestaltung ermöglicht, daß die Schlauchkette in zwei Richtungen verschwenkbar ist, wodurch Umlenkungen in zwei Richtungen möglich sind.

Schließlich wird durch diese Ausgestaltung die Lebensdauer der Schlauchkette verlängert, da sich die Schwenkbewegungen auf zwei Richtungen verteilen.

Eine einfache technische Umsetzung dieser Ausgestaltung erfolgt dadurch, daß die obere bzw. untere Hälfte der Schenkel in Längsrichtung trapezförmig ausgebildet ist. Ein Trapez bildet ein einfaches Profil, das z.B. gußtechnisch leicht herstellbar ist.

Um die Schwenkbewegung der Schlauchkette reibungsärmer und damit verschleißärmer durchzuführen, d.h. die Lebensdauer der Schlauchkette zu erhöhen, ist gemäß einer weiteren vorteilhaften Ausgestaltung der Erfindung vorgesehen, daß die Schenkel in Längsrichtung konvex ausgebildet sind. Mit dieser Form der gegeneinander bewegbaren Flächen wird eine reibungs- und verschleißarme Abrollbewegung ermöglicht, die weiter mit einem geringeren Energieverbrauch beim Auf- bzw. Abwickeln auf bzw. von der Trommel verbunden ist.

Eine weitere vorteilhafte Ausgestaltung der Erfindung sieht vor, daß die Schenkel in Längsrichtung jeweils einen durchgehenden Seilkanal mit einem in der Schenkelwand ausgebildeten Sichtloch aufweisen. Dies ermöglicht eine einfache und zuverlässige Verbindung der einzelnen Kettenglieder, wobei jederzeit eine Kontrolle des Stahlseils möglich ist.

Um z.B. einzelne Schlauchabschnitte miteinander zu verbinden, sind gemäß einer weiteren vorteilhaften Ausgestaltung der Erfindung die Schenkel in Längsrichtung mit mehreren Bohrungen zur Aufnahme von Gewindebolzen versehen.

Gemäß einer weiteren vorteilhaften Ausgestaltung der Erfindung ist vorgesehen, daß der Steg des U-förmigen Querschnitts eine zur Mitte des Kettenglieds abnehmende Breite aufweist. Hierdurch wird eine Gewichtsreduzierung der einzelnen Kettenglieder und damit eine Energieeinsparung beim Betrieb der Schlauchkette erreicht.

Eine weitere vorteilhafte Ausgestaltung der Erfindung sieht vor, daß die Schlauchkette in Modulbauweise ausgebildet ist und die Schlauchkettenmodule an ihren Enden Kupplungseinrichtungen aufweisen. Die Kupplungseinrichtungen sind als mittels Schraubverbindungen und Schellen verbindbare Kettenglieder mit einer ebenen Kupplungsfläche ausgebildet. Auf diese Weise können genormte Schlauchkettenabschnitte, d.h. Schlauchkettenabschnitte bestimmter Länge, in Abhängigkeit von der gewünschten Bautiefe einfach transportiert und vor Ort zweckmäßig miteinander verbunden werden, wodurch der Einsatz derartiger Tiefbauwerkzeuge wesentlich erleichtert wird.

Ausführungsbeispiele der vorliegenden Erfindung sind in der Zeichnung dargestellt und werden im folgenden näher erläutert. Es zeigen:
- Fig. 1: eine geschnittene Teilansicht einer auf einer Trommel angeordneten Schlauchkette;
- Fig. 2: eine teilweise geschnittene Seitenansicht der Schlauchkette;
- Fig. 3: eine Aufsicht auf die Schlauchkette;
- Fig. 4: eine Schnittansicht eines Kettenglieds der Schlauchkette;
- Fig. 5: eine Seitenansicht des Kettenglieds gemäß Fig. 4;
- Fig. 6: eine Schnittansicht des Kettenglieds längs der Linie VI-VI in Fig. 4;
- Fig. 7: eine Aufsicht auf das Kettenglied in Richtung des Pfeils VII in Fig. 4;
- Fig. 8: eine weitere Ausführungsform eines Kettenglieds, insbesondere als Kupplungsteil;
- Fig. 9: eine Schnittansicht des Kettenglieds gemäß Fig. 8 längs der Linie IX-IX; und
- Fig. 10: eine perspektivische Gesamtansicht einer Schlitzwandfräse mit der seitlich angeordneten kettentrommel.

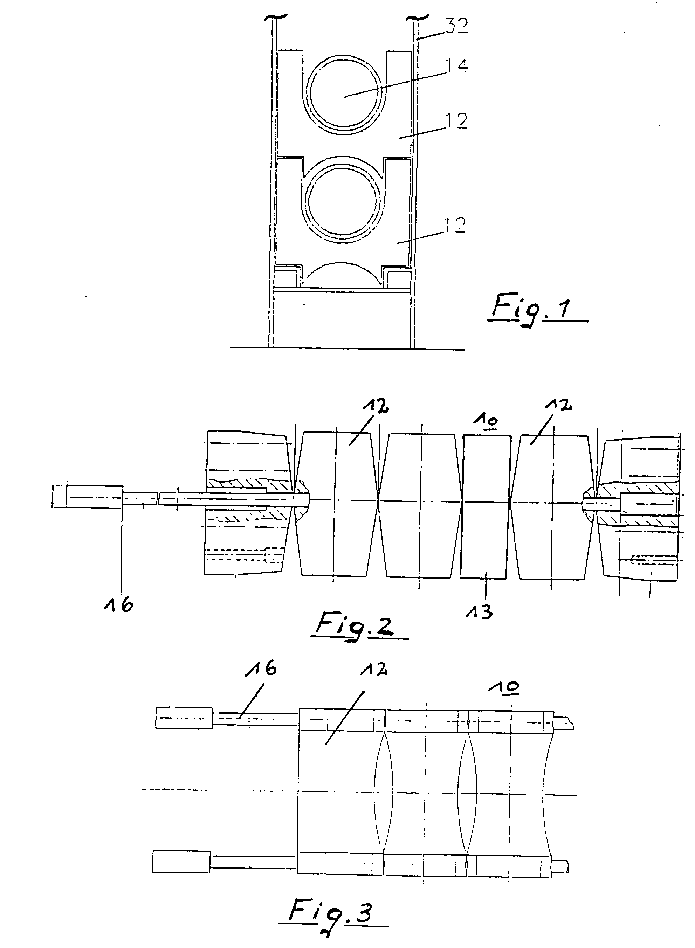

Die in den Fig. 1 bis 3 dargestellte Schlauchkette 10 besteht aus einzelnen, im Querschnitt allgemein U-förmigen Kettengliedern 12, in denen ein Schlauch 14 angeordnet ist.

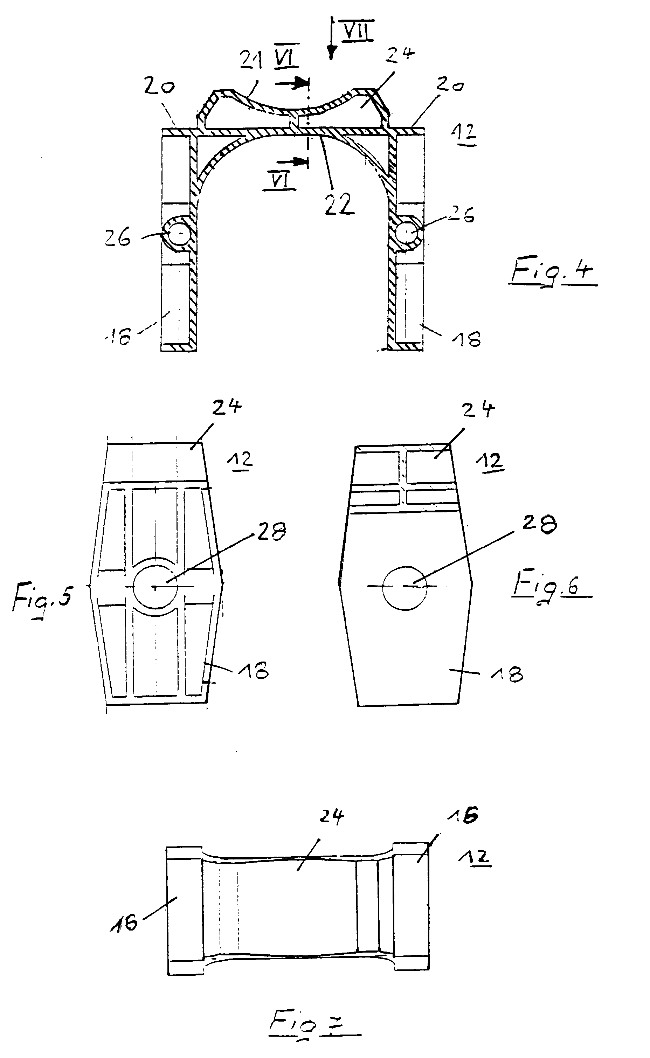

Die einzelnen Kettenglieder 12 sind mittels Stahlseilen 16 in ihren Schenkeln 18 verbunden. Die Stahlseile 16 erstrecken sich durch in den Schenkeln 18 der Kettenglieder 12 angeordnete Seilkanäle 26, die mit Sichtlöchern 23 versehen sind (siehe Fig. 5 und 6). Zwischen einer bestimmten Anzahl von Kettengliedern 12 wird ein Abstand zur Aufnahme einer die Stahlseile 16 und den Schlauch 14 umgreifenden Schelle 13 vorgesehen, um eine sichere Anordnung des Schlauches 14 in den einzelnen Kettengliedern 12 zu gewährleisten.

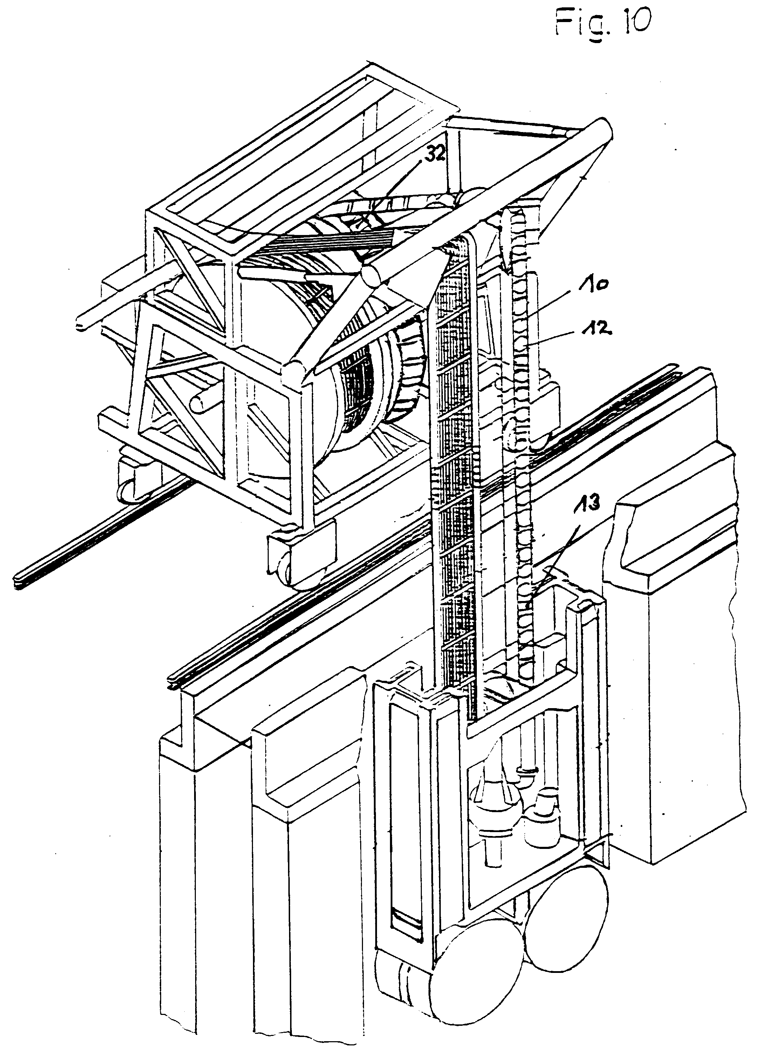

Die Schlauchkette 10 ist auf einer an einem Tiefbauwerkzeug, z.B. einer Schlitzwandfräse (siehe Fig.10), vertikal angeordneten Trommel 32 mehrlagig aufgewickelt. Alternativ ist auch eine horizontal angeordnete Trommel möglich.

Wie insbesondere in Fig. 1, 4 und 8 dargestellt, weist der U-förmige Querschnitt jedes Kettenglieds 12 einen Innendurchmesser auf, der etwa dem Außendurchmesser des Schlauches 14 entspricht. Die oberen freien Enden der Schenkel 18 des U-förmigen Querschnitts erstrecken sich über den Umfang des in dem Kettenglied 12 angeordneten Schlauches 14 un ein bestimmtes Maß hinaus. An ihren unteren äußeren Enden sind Aussparungen 20 ausgebildet, deren Breite etwa der Breite der oberen freien Enden der Schenkel 18 entspricht. Die Aussparungen 20 dienen zur Aufnahme der oberen freien Enden der Schenkel 18 eines darunter angeordneten Kettenglieds 12, wenn die Schlauchkette 10 auf der Trommel 32 aufgewickelt ist.

Auf der Außenseite des Stegs 22 des U-förmigen Querschnitts ist ein Vorsprung 24 mit einer etwa der Krümmung des Außenumfangs des Schlauches entsprechenden konkaven Aussparung 21 ausgebildet. Die Breite des Vorsprungs 24 entspricht etwa dem Innendurchmesser des U-förmigen Querschnitts, so daß sich der Vorsprung 24 im wesentlichen zwischen den beiden Aussparungen 20 erstreckt. Hierdurch wird beim Auf- bzw.

Abwickeln der Schlauchkette 10 auf bzw. von der Trommel 32 eine sichere Führung der einzelnen Kettenglieder 12 und eine sichere Anordnung des Schlauches 14 gewährleistet, da das über einem unteren Kettenglied 12 angeordnete obere Kettenglied 12 das untere Kettenglied 12 mittels des Vorsprungs 24 abschließt und den Schlauch 14 mittels der konkaven Aussparung 21 festlegt.

Wie in den Fig. 2, 5, 6 und 9 dargestellt, weist jedes Kettenglied 12 in seiner Längsrichtung, d.h. in Richtung des Schlauches, ausgehend von seiner mittleren Längsachse, eine zur Oberseite und Unterseite abnehmende Breite auf. Der oben erwähnte Seilkanal 26 erstreckt sich vorzugsweise längs der Längsachse, wie dies in Fig. 2 und 4 dargestellt ist. In dem dargestellten Ausführungsbeispiel ist die obere bzw. untere Hälfte der Schenkel 18 in Längsrichtung trapezförmig ausgebildet, d.h. die Vorder- und Hinterkante der Schenkel 18 verläuft ausgehend von der Längsachse jeweils unter einem Winkel von etwa 6° bis 9°, vorzugsweise 7,5°, zur Oberseite und Unterseite der Schenkel 18. Hierdurch wird eine Bewegung der Schlauchkette 10 sowohl in Richtung der Oberseite als auch der Unterseite der Kettenglieder 12 ermöglicht. Um eine reibungsärmere und damit verschleißärmere Verschwenkung der einzelnen Kettenglieder zu ermöglichen, können die Vorder- und Hinterkanten der Schenkel ebenfalls konvex ausgebildet sein (nicht dargestellt).

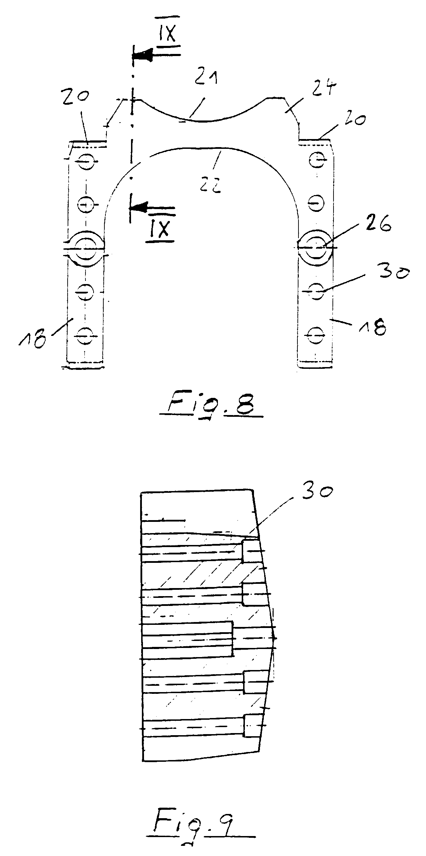

Wie insbesondere in Fig. 3 und 7 gezeigt, weist der Steg 22 jedes Kettenglieds 12 eine zur Mitte abnehmende Breite auf, so daß sich zusammen mit dem U-förmigen Innenraum und den konkaven Aussparungen 21 eine insgesamt etwa hyperbolische Form des Stegs 22 ergibt, wodurch das Gewicht des Kettenglieds vermindert wird. Eine weitere Gewichtseinsparung ergibt sich durch die Ausbildung von Verstärkungsrippen, wenn das Kettenglied 12 als Gußteil hergestellt wird, da dadurch die übrigen Wandabschnitte relativ dünn gehalten werden können, ohne die Festigkeit des Kettenglieds 12 nachteilig zu beeinflussen.

Fig. 8 und 9 zeigen eine weitere Ausführungsform des Kettenendglieds. Dieses Kettenglied 12 dient als Kupplungseinrichtung zum Verbinden einzelner Schlauchkettenabschnitte. Von besonderer Bedeutung ist diese Kupplungseinrichtung in dem Fall, wenn die Schlauchkette 10 in Modulbauweise ausgeführt ist, d.h. aus einzelnen Schlauchkettenmodulen bestimmter Länge besteht, die entsprechend der Arbeitstiefe des Tiefbauwerkzeugs aneinander gekuppelt werden. Zu diesem Zweck sind bei der in Fig. 8 und 9 dargestellten Ausführungsform des Kettenglieds 12 in Längsrichtung der Schenkel 18 mehrere Bohrungen 30 zur Aufnahme von Gewindebolzen vorgesehen, und die Kupplungsfläche ist eben ausgebildet, so daß zwei derartige, jeweils am vorderen und hinteren Ende jedes Schlauchkettenmoduls angeordnete Kettenglieder 12 bzw. Kettengliederhälften, gegebenenfalls unter Zwischenschaltung von Dämpfungsgliedern oder Schellen zum Verbinden der Schlauchkettenmodule, miteinander verschraubt werden können.

Mit der beschriebenen Schlauchkette wird eine mehrlagige Anordnung eines Schlauches 14 zur Förderung eines Fluids, insbesondere eines mit Spülflüssigkeit vermischten Abraums bei einem Tiefbauwerkzeug, auf einer vertikal am Tiefbauwerkzeug angeordneten Trommel 32 erreicht. Weiter ermöglicht die Schlauchkette 10 ein steuerndes Ab- bzw. Aufwickeln des Schlauches 14 in der Art, daß durch das auf das Tiefbauwerkzeug, z.B. einer Schlitzwandfräse, wirkende Gewicht der Schlauchkette 10 eine Be- oder Entlastung des Werkzeugs und damit eine Steuerung des Werkzeugs erreicht wird.

## Patentansprüche

1. Schlauchkette (10), bestehend aus im Querschnitt allgemein U-förmigen Kettengliedern (12) zur Aufnahme eines Schlauches, die mittels Stahlseilen (16) jeweils an ihren Schenkeln (18) verbunden sind,
dadurch gekennzeichnet,
daß der Innendurchmesser des U-förmigen Querschnitts etwa dem Außendurchmesser des Schlauches (14) entspricht,
daß die oberen freien Schenkel (18) des U-förmigen Querschnitts sich über den Schlauchumfang hinaus erstrecken,
daß die Schenkel (18) an ihren äußeren unteren Enden Aussparungen (20) zur Aufnahme von darunter angeordneten, sich über den Schlauchumfang hinaus erstreckenden freien Schenkeln (18) aufweisen, und
daß der Steg (22) des U-förmigen Querschnitts auf seiner Außenseite einen Vorsprung (24) aufweist.

2. Schlauchkette nach Anspruch 1, dadurch gekennzeichnet, daß der Vorsprung (24) so ausgebildet ist, daß er den Schlauchumfang eines in einem darunter positionierten Kettenglied (12) angeordneten Schlauches (14) berührt oder an diesem anliegt.

3. Schlauchkette nach Anspruch 1 oder 2, dadurch gekennzeichnet, daß der Vorsprung (24) mit einer etwa der Krümmung des Außenumfangs des Schlauches (14) entsprechenden konkaven Aussparung (21) versehen ist.

4. Schlauchkette nach einem der Ansprüche 1 bis 3, dadurch gekennzeichnet, daß die Breite des Vorsprungs (24) etwa dem Innendurchmesser des U-förmigen Querschnitts entspricht.

5. Schlauchkette nach einem der Ansprüche 1 bis 4, dadurch gekennzeichnet, daß jedes Kettenglied (12) in seiner Längsrichtung, ausgehend von seiner Längsachse, eine zur Ober- und Unterseite hin abnehmende Breite aufweist.

6. Schlauchkette nach Anspruch 5, dadurch gekennzeichnet, daß die obere bzw. untere Hälfte der Schenkel (18) in Längsrichtung trapezförmig ausgebildet ist.

7. Schlauchkette nach Anspruch 5, dadurch gekennzeichnet, daß die Schenkel (18) in Längsrichtung konvex ausgebildet sind.

8. Schlauchkette nach einem der Ansprüche 1 bis 7, dadurch gekennzeichnet, daß die Schenkel (18) in Längsrichtung jeweils einen durchgehenden Seilkanal (26) aufweisen.

9. Schlauchkette nach einem der Ansprüche 1 bis 8, dadurch gekennzeichnet, daß der Seilkanal (26) ein Sichtloch (28) aufweist.

10. Schlauchkette nach einem der Ansprüche 1 bis 9, dadurch gekennzeichnet, daß die Schenkel (18) in Längsrichtung jeweils mehrere Bohrungen (30) zur Aufnahme von Gewindebolzen aufweisen.

11. Schlauchkette nach einem der Ansprüche 1 bis 10, dadurch gekennzeichnet, daß der Steg (22) des U-förmigen Querschnitts eine zur Mitte des Kettenglieds (12) abnehmende Breite aufweist.

12. Schlauchkette nach einem der Ansprüche 1 bis 11, dadurch gekennzeichnet, daß die Schlauchkette (10) in Modulbauweise ausgebildet ist und die Schlauchkettenmodule an ihren Enden Kupplungseinrichtungen aufweisen.

13. Schlauchkette nach einem der Ansprüche 1 bis 12, dadurch gekennzeichnet, daß die Kupplungseinrichtungen als mittels Schraubverbindungen und Schellen verbindbare Kettenglieder (12) mit einer ebenen Kupplungsfläche ausgebildet sind.

14. Schlauchkette nach einem der Ansprüche 1 bis 13, dadurch gekennzeichnet, daß sie nach Art einer Entsorgunsleitung zum Abtransport des mit einer Spülflüssigkeit vermischten Abraums bei einer Schlitzwandfräse verwendet wird.

## Claims

1. Hose chain (10) comprising cross-sectionally generally U-shaped chain links (12) for receiving a hose, which are interconnected at their legs (18) by means of steel cables (16),
**characterized** in
that the inside diameter of the U-shaped cross-section approximately corresponds to the outside diameter of the hose (14),
that the free, upper legs (18) of the U-shaped cross-section extend over and beyond the hose circumference,
that the legs (18) are provided at their outer, lower ends with recesses (20) for receiving the free legs (18) arranged below them and extending over and beyond the hose circumference, and
that the web (22) of the U-shaped cross-section has a projection (24) on its outside.

2. Hose chain according to claim 1,
**characterized** in
that the projection (24) is constructed in such a way that it contacts or engages on the hose circumference of a hose (14) located in a chain link (12) positioned below it.

3. Hose chain according to claim 1 or 2,
**characterized** in
that the projection (24) is provided with a concave recess (21) roughly corresponding to the curvature of the outer circumference of the hose (14).

4. Hose chain according to one of the claims 1 to 3,
**characterized** in
that the width of the projection (24) roughly corresponds to the inside diameter of the U-shaped cross-section.

5. Hose chain according to one of the claims 1 to 4,
**characterized** in
that each chain link (12) has in its longitudinal direction and starting from its longitudinal axis a width decreasing towards the top and bottom.

6. Hose chain according to claim 5,
**characterized** in
that the upper respectively lower half of the legs (18) is longitudinally trapezoidal.

7. Hose chain according to claim 5,
**characterized** in
that the legs (18) are longitudinally convex.

8. Hose chain according to one of the claims 1 to 7,
**characterized** in
that the legs (18) have in each case a longitudinally directed through cable duct (26).

9. Hose chain according to one of the claims 1 to 8,
**characterized** in
that the cable duct (26) has an inspection hole (28).

10. Hose chain according to one of the claims 1 to 9,
**characterized** in
that the legs (18) are in each case provided longitudinally with several bores (30) for receiving threaded bolts.

11. Hose chain according to one of the claims 1 to 10,
**characterized** in
that the web (22) of the U-shaped cross-section has a width decreasing towards the centre of the chain link (12).

12. Hose chain according to one of the claims 1 to 11,
**characterized** in
that the hose chain (10) has a modular construction and the hose chain modules have coupling devices at their ends.

13. Hose chain according to one of the claims 1 to 12,
**characterized** in
that the coupling devices are constructed as chain lins (12), connectable by means of screw connections and clamps, having a planar coupling surface.

14. Hose chain according to one of the claims 1 to 13,
**characterized** in
that it is used in the manner of a disposal line for conveying away of the waste mixed with a washing fluid in the case of a slotted wall milling tool.

## Revendications

1. Chaîne (10) de support de conduite, constituée de maillons (12) de chaîne de section transversale globalement en U destinés à recevoir une conduite qui est reliée à chaque fois à leurs branches (18) par des cordes en acier (16), ***caractérisée en ce que*** le diamètre intérieur de la section en U correspond approximativement au diamètre extérieur de la conduite (14), ***en ce que*** les branches libres supérieures (18) de la section en U s'étendent au-delà de la circonférence de la conduite, ***en ce que*** les branches (18) présentent sur leurs extrémités inférieures extérieures des évidements (20) destinés à recevoir des branches libres (18) placées au-dessous et s'étendant au-delà de la circonférence de la conduite, et ***en ce que*** la barre (22) de la section en U présente une saillie (24) sur sa face extérieure.

2. Chaîne de support de conduite selon la Revendication 1, ***caractérisée en ce que*** la saillie (24) est conformée de telle sorte qu'elle touche, ou s'appuie contre, la circonférence d'une conduite (14) placée dans un maillon (12) de chaîne placé au-dessous.

3. Chaîne de support de conduite selon la Revendication 1 ou 2, ***caractérisée en ce que*** la saillie (24) est munie d'un évidement concave (21) correspondant approximativement à la cour bure de la circonférence extérieure de la conduite (14).

4. Chaîne de support de conduite selon l'une quelconque des Revendications 1 à 3, ***caractérisée en ce que*** la largeur de la saillie (24) correspond approximativement au diamètre intérieur de la section en U.

5. Chaîne de support de conduite selon l'une quelconque des Revendications 1 à 4, ***caractérisée en ce que*** chaque maillon (12) de chaîne présente dans sa direction longitudinale, en partant de son axe longitudinal, une largeur qui diminue en direction de la face supérieure et de la face inférieure.

6. Chaîne de support de conduite selon la Revendication 5, ***caractérisée en ce que*** la moitié supérieure ou inférieure des branches (18) est d'une configuration trapézoïdale dans la direction longitudinale.

7. Chaîne de support de conduite selon la Revendication 5, ***caractérisée en ce que*** les branches (18) sont d'une configuration convexe dans la direction longitudinale.

8. Chaîne de support de conduite selon l'une quelconque des Revendications 1 à 7, ***caractérisée en ce que*** les branches (18) présentent chacune, dans la direction longitudinale, un canal continu (26) pour câbles.

9. Chaîne de support de conduite selon l'une quelconque des Revendications 1 à 8, ***caractérisée en ce que*** le canal (26) pour câbles présente un trou outre (28).

10. Chaîne de support de conduite selon l'une quelconque des Revendications 1 à 9, ***caractérisée en ce que*** les branches (18) présentent chacun, dans la direction longitudinale, plusieurs perçages (30) destinés à recevoir des tiges filetées.

11. Chaîne de support de conduite selon l'une quelconque des Revendications 1 à 10, ***caractérisée en ce que*** la barre (22) de la section en U présente une largeur décroissante en direction du centre du maillon de chaîne (12).

12. Chaîne de support de conduite selon l'une quelconque des Revendications 1 à 11, ***caractérisée en ce que*** la chaîne (10) de support de conduite est conformée de manière modulaire et les modules de chaînes de conduite présentent des dispositifs d'accouplement à leurs extrémités.

13. Chaîne de support de conduite selon l'une quelconque des Revendications 1 à 12, ***caractérisée en ce que*** les dispositifs d'accouplement sont conformés en maillons (12) de chaîne pouvant être assemblés au moyen de raccords vissés et de colliers et comportant une surface d'accouplement plane.

14. Chaîne de support de conduite selon l'une quelconque des Revendications 1 à 13, ***caractérisée en ce qu***'elle est utilisée à la manière d'une conduite de décharge pour l'évacuation d'un déblais mélangé à un liquide de rinçage avec une fraise à rideau souterrain.
